Europäisches Patentamt

European Patent Office

Office européen des brevets

(19)

(11) Numéro de publication : **0 077 585**
**B1**

(12) FASCICULE DE BREVET EUROPÉEN

(45) Date de publication du fascicule du brevet :
28.05.86

(21) Numéro de dépôt : 82201267.0

(22) Date de dépôt : 12.10.82

(51) Int. Cl.⁴ : **G 01 S 7/52,** G 01 S 7/62,
G 01 S 15/02, A 61 B 10/00

(54) Appareil d'exploration de milieux par échographie ultrasonore.

(30) Priorité : 19.10.81 FR 8119585

(43) Date de publication de la demande :
27.04.83 Bulletin 83/17

(45) Mention de la délivrance du brevet :
28.05.86 Bulletin 86/22

(84) Etats contractants désignés :
BE DE FR GB SE

(56) Documents cités :
EP-A- 0 043 158
FR-A- 2 476 319
US-A- 3 952 280
US-A- 4 057 049
US-A- 4 228 804
IEEE TRANSACTIONS ON SONICS AND ULTRASO-
NICS, vol. SU-21, no. 2, avril 1974, pages 91-97, New
York (USA); D.H. McSHERRY: "Computer processing
of diagnostic ultrasound data"
1976 ULTRASONICS SYMPOSIUM PROCEEDINGS,
IEEE Catalog no. 76 Ch 1120 5SU, pages 714-719,
New York (USA); F.L. LIZZI et al.: "Tissue signature
characterization utilizing frequency domain analysis"

(73) Titulaire : **Laboratoires d'Electronique et de Physique
Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**BE DE GB SE**

(72) Inventeur : **Fink, Mathias**
**Société Civile S.P.I.D. 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

# 0 077 585

**Description**

La présente invention a trait à un appareil d'exploration de milieux et notamment de tissus biologiques par échographie ultrasonore comportant au moins un transducteur ultrasonore associé à un étage d'émission pour assurer l'émission répétée de signaux ultrasonores et à un étage de réception pour assurer la réception des échos ultrasonores correspondant aux obstacles principaux rencontrés dans leur direction de propagation par les signaux émis, l'étage de réception comprenant un premier circuit de traitement des échos reçus composé essentiellement d'un premier amplificateur relié à l'électrode de sortie du transducteur, d'un dispositif de compensation de gain, et d'un dispositif de visualisation en fonction du temps des positions des échos le long de la direction d'exploration et de leurs amplitudes. Plus précisément, elle concerne, dans un tel appareil, un étage de réception dont l'avantage essentiel consiste dans l'amélioration considérable de la quantité d'informations utiles fournie par l'image ultrasonore. Dans les applications médicales, une telle amélioration permet un diagnostic plus précis et plus sûr.

Selon l'invention, l'appareil est caractérisé en ce que l'étage de réception comprend, en parallèle sur ce premier circuit de traitement, un deuxième circuit de traitement composé essentiellement :

A) d'un deuxième amplificateur également relié à l'électrode de sortie du transducteur ;

B) en sortie de ce deuxième amplificateur, d'un ensemble de n voies en parallèle les unes sur les autres et comprenant elles-mêmes chacune successivement :

1) un filtre passe-bande, l'ensemble des filtres ainsi prévus étant tel que leurs bandes passantes respectives sont sensiblement jointives de façon à couvrir approximativement la bande passante du deuxième amplificateur ; et

2) un détecteur d'enveloppe comprenant un redresseur et un filtre passe-bas à constante de temps réglable ;

C) en sortie des n voies, d'un circuit d'évaluation, à partir de leurs signaux de sortie, d'un paramètre qui est un indicateur de dispersion des amplitudes des signaux de fréquence centrale de chaque voie à l'intérieur de la gamme de fréquence couverte par l'ensemble de ces voies et qui, simultanément, est en corrélation locale directe avec la pente moyenne $\beta$, dite coefficient différentiel d'atténuation ultrasonore, de la courbe de variation de l'atténuation ultrasonore dans les tissus explorés en fonction de la fréquence ;

D) en sortie du circuit d'évaluation, d'un circuit de détermination de la valeur du coefficient $\beta$ à l'intérieur de chacune des zones délimitées dans les tissus explorés par les échos correspondant aux obstacles principaux rencontrés, la sortie de ce circuit étant reliée au dispositif de visualisation.

Dans le cas des applications médicales par exemple, les échographies de type classique permettent l'obtention d'une image ultrasonore où n'apparaissent avec netteté que les frontières entre tisus. Entre ces frontières, repérées sur les échogrammes de type A par des échos de grande amplitude, se situent des zones échogènes de moindre importance qui ne sont généralement visualisées qu'après des traitements de compression de dynamique, sous la forme de niveaux de gris arbitraires (c'est-à-dire ne présentant aucune relation avec une information quantitative quelconque).

L'appareil qui fait l'objet de l'invention permet au contraire l'obtention d'informations quantitatives précises dans ces zones, en ce sens que le deuxième circuit de traitement proposé effectue avec une résolution élevée l'évaluation locale d'un paramètre qui est en relation directe avec la valeur du coefficient différentiel d'atténuation ultrasonore à l'intérieur desdites zones (coefficient qui est une évaluation de la dépendance en fréquence de l'atténuation ultrasonore). Cette information quantitative est ensuite utilisée soit pour permettre, en échographie de type A, la visualisation directe des valeurs de ce coefficient d'atténuation ultrasonore dans chacune desdites zones délimitées le long de la direction d'exploration, soit pour moduler, en échographie de type B, l'image finale bidimensionnelle d'une section plane des tissus, par exemple à l'aide d'une échelle de nuances de gris ou d'un registre de différentes couleurs. En substituant ainsi à une information purement qualitative une représentation quantitative beaucoup plus fine, il devient possible de déceler des faibles variations du coefficient différentiel d'atténuation ultrasonore, dues par exemple à la présence dans un organe sain où ce coefficient a une valeur déterminée d'une tumeur modifiant légèrement cette valeur, et d'accroître considérablement la sûreté des diagnostics.

La mesure du coefficient $\beta$ d'un tissu biologique est connue d'un article par L. Lizzi et al. apparu en « 1976 Ultrasonics Symposium Proceedings IEEE », Cat. 76 CH 1120-5 SU, pages 714-719.

Les particularités de l'invention apparaîtront maintenant de façon plus précise dans la description qui suit et dans les dessins annexés, donnés à titre d'exemple non limitatif et dans lesquels :

la figure 1 est une représentation d'un exemple de réalisation de l'appareil selon l'invention ;

la figure 2 est une représentation discrétisée dans le temps du phénomène continu, obtenu électroniquement, que constitue la succession de spectres de fréquence en sortie des n voies du dispositif de traitement d'échos :

les figures 3 et 4 mettent respectivement en évidence, à l'aide de jeux de courbes 3a à 3n et 4a à 4n, l'évolution dans le temps des signaux dans les voies en parallèle, respectivement avant et après la détection d'enveloppe, tandis que la figure 5 est un exemple d'échogramme classique (de type A) de sortie du premier circuit de traitement ; et

2

la figure 6 est un exemple de réalisation du circuit d'évaluation du dispositif de traitement de la figure 1.

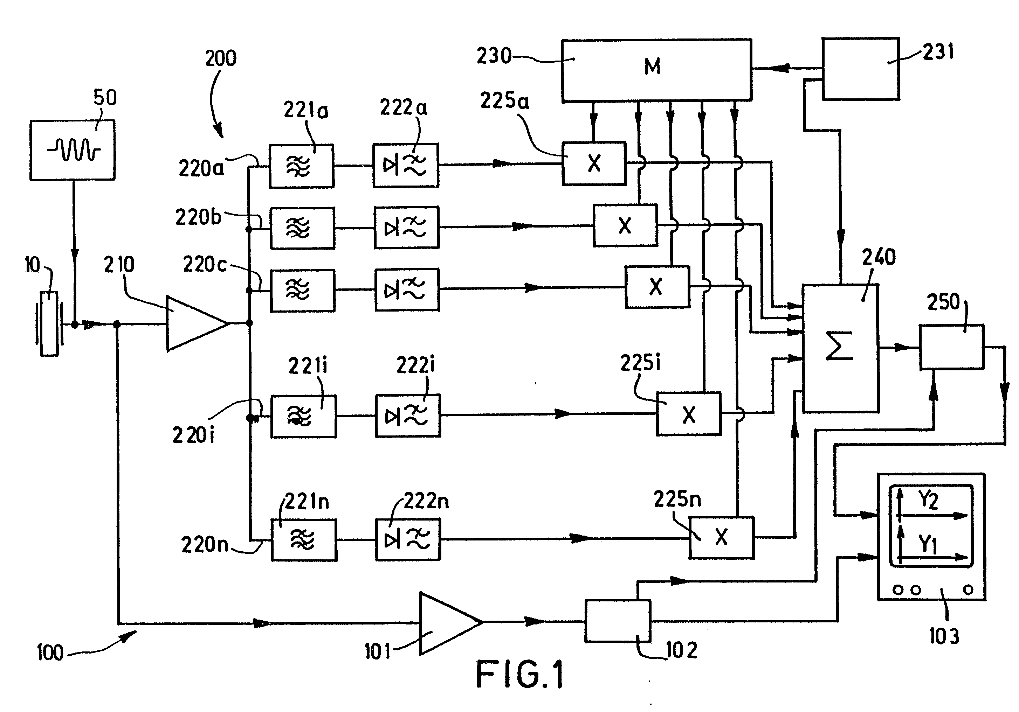

L'appareil décrit en référence à la figure 1 est équipé d'une sonde unique constituant le support d'un transducteur ultrasonore 10 et permettant d'obtenir des échographies de type A. Il va sans dire que l'invention est applicable exactement de la même manière si l'on explore non plus seulement une ligne, mais toute une section plane des tissus soit à l'aide d'une sonde à déplacement manuel ou à déplacement mécanique angulaire dit sectoriel, associée à un écran de visualisation du type radar, soit à l'aide d'une barrette linéaire de p transducteurs ultrasonores définissant un même nombre p de directions d'exploration parallèles dans les tissus à examiner et associée à un circuit de commutation du dispositif de traitement d'échos successivement sur chaque transducteur ou groupe de transducteurs en fonctionnement, soit encore à l'aide d'une barrette de transducteurs dite à balayage électronique sectoriel également associée à un circuit de commutation du dispositif de traitement ainsi qu'à un réseau de lignes à retard ou de déphaseurs.

Le transducteur 10 est associé d'une part à un étage d'émission 50 destiné à permettre l'émission répétée de signaux ultrasonores par le transducteur dans une direction d'exploration quelconque à travers les tissus à examiner et d'autre part à un étage de réception destiné à assurer le traitement des échos ultrasonores reçus par le transducteur et correspondant aux obstacles principaux rencontrés dans leur direction de propagation par les signaux émis. Ces obstacles sont repérés sur les échogrammes par les échos de grande amplitude qui matérialisent les frontières entre tissus dont on cherche à déterminer les coefficients différentiels d'atténuation ultrasonore.

D'une façon tout à fait classique, l'étage de réception comprend un premier circuit de traitement 100 des échos ultrasonores reçus, composé d'un premier amplificateur 101 (qui est en fait un préamplificateur), d'un dispositif de compensation de gain 102 et d'un dispositif de visualisation 103. Le transducteur 10 est relié par son électrode de sortie à l'entrée de l'amplificateur 101, dont les signaux de sortie traversent le dispositif 102 assurant la compensation de l'amplitude des échos en fonction de la distance puis sont visualisés sur le dispositif 103, sous la forme d'une échographie de type A, sur un axe correspondant à la direction principale de propagation du transducteur 10.

Conformément à une caractéristique de l'invention, l'étage de réception comprend aussi un deuxième circuit de traitement 200, placé en parallèle sur le premier circuit de traitement 100 et composé à son tour des éléments suivants :

A) un deuxième amplificateur 210 recevant également le signal de sortie du transducteur 10.

B) un ensemble de n voies 220a à 220n en parallèle les unes sur les autres en sortie de l'amplificateur 210, comprenant elles-mêmes chacune successivement :

1) un filtre passe-bande 221a à 221n, l'ensemble des n filtres ainsi prévus étant tel que leurs bandes passantes respectives sont sensiblement égales et jointives et couvrent approximativement la bande passante du deuxième amplificateur 210 ;

2) un détecteur d'enveloppe 222a à 222n, identique dans chaque voie et comprenant un redresseur suivi d'un filtre passe-bas à constante de temps réglable de préférence à une valeur supérieure à l'intervalle de temps moyen qui sépare les échos de faible amplitude correspondant à deux centres diffuseurs adjacents (les centres diffuseurs étant les plus petits éléments échogènes des tissus explorés), ceci afin de diminuer le bruit inhérent au milieu biologique et à ses inhomogénéités ;

3) un circuit de multiplication 225a à 225n, qui reçoit sur une première entrée le signal de sortie du détecteur d'enveloppe correspondant et sur une deuxième entrée un signal de correction délivré par une mémoire 230, elle-même commandée par un circuit d'horloge 231. Ce signal, dit premier signal de correction, assure la compensation de l'effet de diffraction qui se produit dans la zone dite de champ proche du transducteur par le fait que les dimensions du transducteur ne sont pas infiniment petites ; l'action de ce phénomène de diffraction est celle d'un filtre passe-bas dont la fréquence de coupure augmenterait avec la profondeur des échos (c'est-à-dire avec la distance à laquelle se trouvent les obstacles principaux rencontrés par rapport au transducteur 10). Il s'ensuit que ladite action est de plus en plus faible au fur et à mesure que l'on s'éloigne du transducteur, et nulle en zone de champ éloigné ; il serait donc possible de ne pas prévoir dans le dispositif de traitement les n circuits de multiplication 225a à 225n ni bien entendu la mémoire 230 associée qui fournit les valeurs des signaux de correction, à la condition que les tissus à examiner soient entièrement situés en zone de champ éloigné vis-à-vis du transducteur utilisé.

C) en sortie des n voies 220a à 220n, un circuit d'évaluation 240 qui, à partir des n signaux de sortie de ces voies, évalue un paramètre satisfaisant simultanément les deux réalités suivantes : (a) par le mode de prélèvement des informations qui vont en permettre la détermination, ce paramètre constitue un indicateur de la dispersion des amplitudes des signaux de fréquence centrale de chaque voie à l'intérieur de la gamme de fréquence couverte par l'ensemble des n voies ; (b) par le choix ainsi effectué du mode d'utilisation des n signaux de sortie, ce paramètre s'avère être en corrélation locale directe avec la pente moyenne $\beta$ de la courbe de variation de l'atténuation ultrasonore dans les tissus explorés en fonction de la fréquence (cette pente $\beta$ étant appelée coefficient différentiel d'atténuation ultrasonore). Le paramètre déterminé dans le cas présent par le circuit 240, sans que ce choix soit limitatif, est le centre de gravité des signaux de sortie des n voies 220a à 220n, dont l'évolution en fonction du temps (c'est-à-dire de la distance le long de la direction d'exploration) satisfait la condition (b) ci-dessus. Ce centre de gravité est défini par la relation suivante dans le cas de signaux continus :

$$g(t) = \frac{\int_{f_1}^{f_2} f \cdot H(f, t) \cdot df}{\int_{f_1}^{f_2} H(f, t) \cdot df} \tag{1}$$

expression dans laquelle H (f, t) est la transformée de Fourier du signal échantillonné en fréquence et $f_1$ et $f_2$ définissent la bande passante du transducteur. Dans le cas de signaux discrets (ce qui se produit ici puisque le nombre n des voies en parallèle est bien entendu limité), la relation (1) devient :

$$g(t) = \frac{\sum_{f_a}^{f_n} f_i \cdot |H(f_i, t)|}{\sum_{f_a}^{f_n} |H(f_i, t)|} . \tag{2}$$

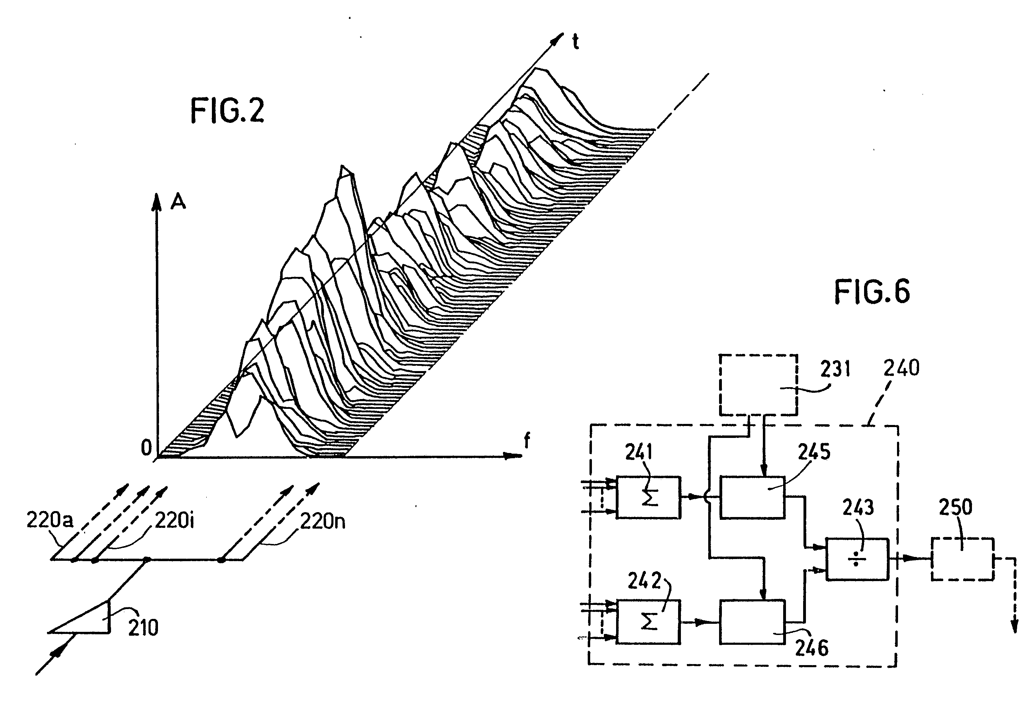

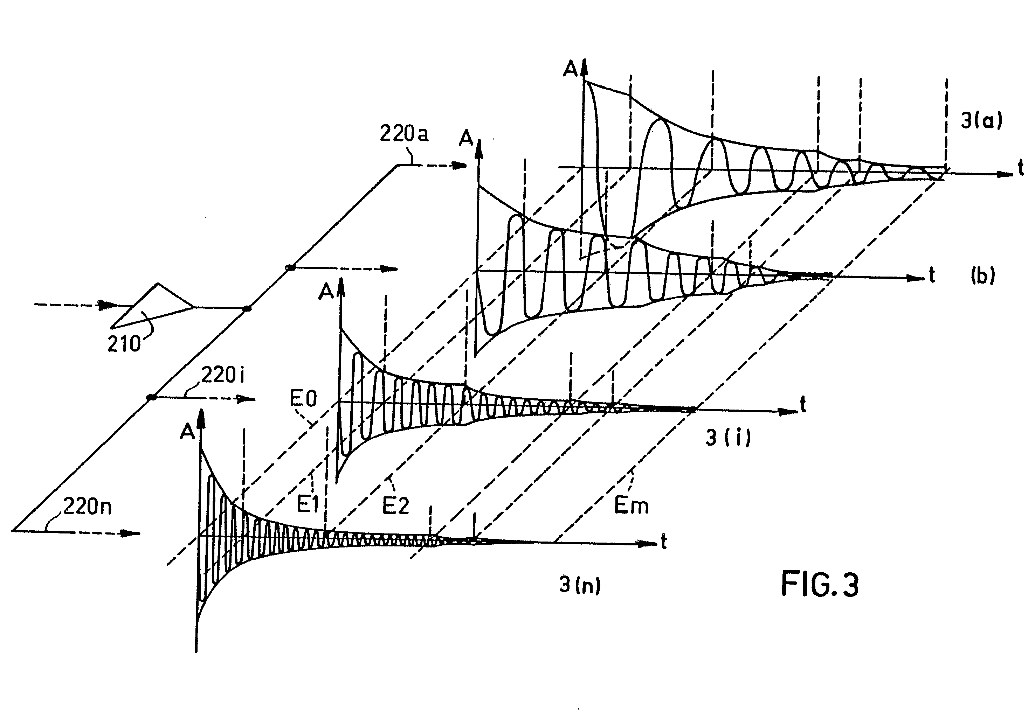

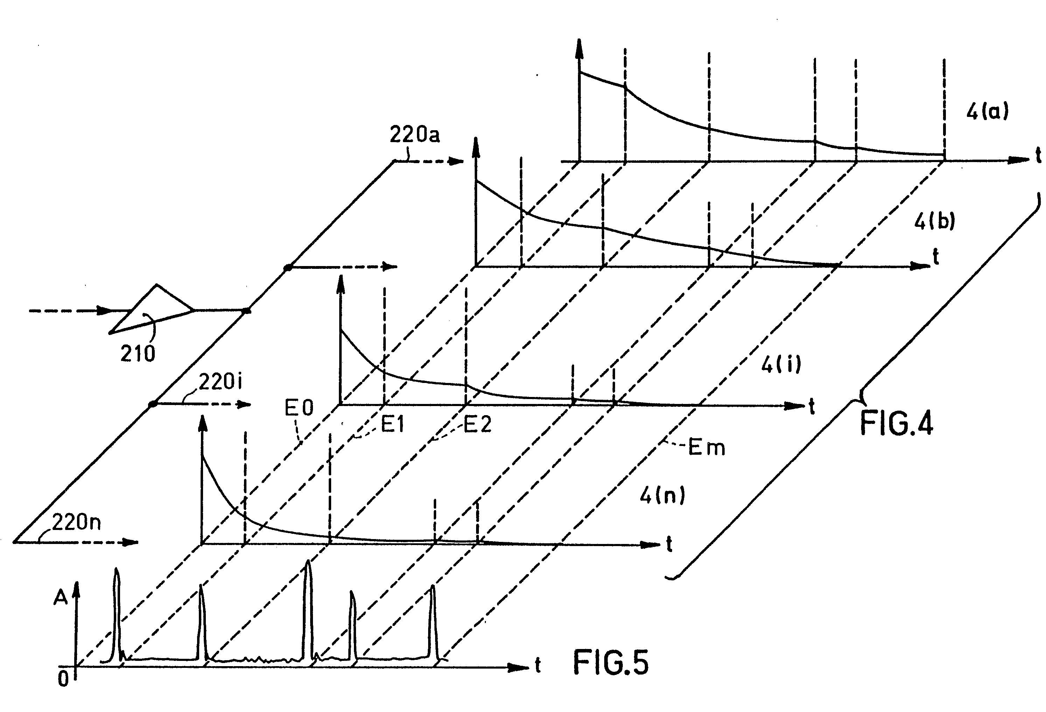

En bref, on peut dire que sont disponibles en continu en sortie des n voies en parallèle du dispositif de traitement des sortes de clichés, des instantanés du spectre de fréquence du signal de sortie du transducteur 10, à chacun desquels le circuit d'évaluation 240 fait correspondre une valeur correspondante du centre de gravité, dont on peut donc suivre, ainsi, l'évolution en fonction du temps. La figure 2 met en évidence, par une vue en perspective, un exemple de succession de tels clichés dans le temps, le spectre de chaque cliché étant défini dans un repère (Of, OA) comprenant un axe des fréquences et un axe des amplitudes (et l'axe des temps étant en fait l'axe de propagation des signaux dans les n voies 220a à 220n, dont la « position » par rapport à cette vue en perspective est indiquée sur la figure 2 aux seules fins de l'explication). La figure 3 met, elle, en évidence à l'aide d'un jeu de courbes 3(a) à 3(n) l'évolution dans le temps des signaux de sortie des filtres passe-bande 221a à 221n, avant redressement et filtrage passe-bas par les détecteurs d'enveloppe 222a à 222n, tandis que la figure 4 montre ces mêmes signaux mais en sortie de ces détecteurs d'enveloppe (là encore, l'amplificateur 210 et l'entrée des n voies 220a à 220n sont rappelés sur la gauche des figures 3 et 4, par une vue en perspective les alignant avec les courbes correspondantes). Pour chaque courbe des figures 3 et 4, les signaux sont tracés par zones, ces zones étant elles-mêmes délimitées par les frontières Eo à Em entre tissus dont on cherche à déterminer les coefficients différentiels d'atténuation ultrasonore, frontières qui correspondent aux échos de grande amplitude visibles sur l'échogramme de sortie du premier circuit de traitement 100 (un exemple d'un tel échogramme est représenté sur la figure 5 à lire en correspondance avec les courbes 4(a) à 4(n) de la figure 4). La figure 6 montre un exemple de réalisation du circuit d'évaluation 240 qui comprend un premier circuit 241 de sommation des n signaux de sortie des voies 220a à 220n, un deuxième circuit 242 de sommation de ces mêmes signaux de sortie mais pondérés chacun par un coefficient proportionnel à la fréquence centrale de chaque voie 220a à 220n (l'insertion d'un jeu de n résistances, aux valeurs appropriées, dans les n voies d'entrée du circuit de sommation 242 permet cette pondération), et un diviseur 243 du signal de sortie du circuit 242 par celui du circuit 241. Un échantillonneur-bloqueur, 245 à 246 respectivement, est inséré entre la sortie de chaque circuit 241 ou 242 et l'entrée correspondante du diviseur 243 ; ces circuits 245 et 246, commandés par le circuit d'horloge 231, sont prévus pour maintenir suffisamment longtemps les signaux sur les entrées du diviseur 243 et laisser à la division le temps d'être effectivement réalisée.

D) en sortie du circuit d'évaluation 240, un circuit 250 de détermination de la valeur du coefficient différentiel β d'atténuation ultrasonore à l'intérieur de chacune des zones délimitées dans les tissus. Ce circuit 250, piloté par les signaux traversant le premier circuit de traitement 100, est un circuit de dérivation analogique précédé d'un filtre passe-bas pour lisser le bruit encore présent sur le signal de sortie du circuit d'évaluation 240 ; il peut également être réalisé en version numérique. La corrélation entre la position du centre de gravité des signaux de sortie des n voies et la valeur du coefficient β est directe en zone de champ éloigné. Plus complexe en zone de champ proche en raison de l'effet de diffraction mentionné plus haut, elle redevient directe même dans cette dernière zone si l'on effectue la correction rendue possible par la présence des circuits de multiplication 225a à 225n et de la mémoire 230. L'envoi des premiers signaux de correction sur les deuxièmes entrées des circuits de multiplication n'est cependant réalisable que si les valeurs devant être prises par ces signaux dans chaque voie ont été préalablement stockées dans la mémoire 230, à la suite d'une phase de calibration préliminaire (pour cette phase de calibration, il suffit de prendre en compte la réponse échographique du transducteur choisi lorsque celui-ci est placé en face d'un plan réflecteur métallique situé successivement à toutes les distances du transducteur correspondant aux profondeurs usuelles d'examen échographique). La cadence d'arrivée de ces premiers signaux de correction dans chaque voie est fixée par le circuit d'horloge 231. Compte tenu de l'existence de la constante de temps des détecteurs d'enveloppe qui, de préférence, doit être supérieure à la valeur précisée précédemment (intervalle de temps moyen entre échos correspondant à deux centres diffuseurs adjacents) il est utile que la période d'horloge soit inférieure à cette constante de temps ; les essais réalisés ont conduit dans le cas présent au choix d'une fréquence d'horloge de 200 kilohertz, ce qui, par exemple pour une émission ultrasonore d'une durée voisine de 300 microsecondes, correspondant à une profondeur des tissus d'environ 20 centimètres, fixe le nombre de signaux de correction à stocker dans la mémoire 230 pour chaque voie à la valeur 60, le nombre total d'emplacements distincts dans la mémoire devant alors être égal à 60n pour l'ensemble du dispositif de traitement d'échos. Le signal de sortie du circuit 250 module alors l'image présentée sur le dispositif de visualisation 103. Dans l'exemple ici décrit, cette image est composée de la façon suivante : elle comprend d'une part l'échogramme classique de type A fourni par le premier circuit de traitement 100 et envoyé sur une première voie $Y_1$ du dispositif 103, d'autre part une courbe en paliers affichée sur une deuxième voie $Y_2$ et représentant les différentes valeurs du coefficient d'atténuation ultrasonore entre les frontières définies par l'échogramme de la voie $Y_1$, la voie $Y_2$ étant donc modulée par le signal de sortie du circuit 250.

Bien entendu, la présente invention n'est pas limitée à l'exemple de réalisation qui vient d'être décrit et représenté, à partir duquel des variantes peuvent être proposées sans pour cela sortir du cadre de l'invention. En particulier, les circuits de multiplication 225a à 225n, dont on a plus haut précisé l'utilité lorsqu'on veut corriger des effets de diffraction en zone de champ proche du transducteur, peuvent également servir à corriger la fonction de transfert de ce transducteur si celle-ci n'est pas gaussienne. En effet, lorsque cette fonction de transfert est gaussienne, l'expression du coefficient β (pente de la courbe de variation de l'atténuation en fonction de la fréquence) montre qu'il y a proportionalité entre β et la pente $\Delta f/\Delta t$ :

$$\beta \ (\text{en dB/cm/MHz}) = \frac{C}{\sigma^2} \times \frac{\Delta f \ (\text{MHz})}{\Delta t \ (\mu s)} \qquad (3)$$

où $\Delta f$ est la variation de la fréquence du centre de gravité, où C est un coefficient constant et où $\sigma$, également constant, est présent dans l'expression H (f) du spectre d'un écho, lorsque la fonction de transfert du transducteur est gaussienne, sous la forme :

$$H(f) = \exp\frac{-\,(f - f_0)^2}{2\,\sigma^2} \qquad (4)$$

($f_0$ étant la fréquence centrale du transducteur et $\sigma$ l'écart-type).

De cette proportionalité, il résulte que la variation de la fréquence du centre de gravité en fonction du temps, $\Delta f/\Delta t$, est rigoureusement constante dans chacune des zones de coefficient β fixé délimitées dans les tissus à l'aide du premier circuit de traitement 100. Au contraire, lorsque la fonction de transfert du transducteur utilisé n'est pas gaussienne, cette courbe de variation de la fréquence du centre de gravité en fonction du temps n'est plus une droite, et l'expression de la valeur moyenne de β dans chaque zone est beaucoup plus complexe. Cette même expression redevient donc simple si, bien que non gaussienne, la fonction de transfert du transducteur peut être corrigée, par exemple par une nouvelle mise à contribution de la mémoire 230 et des circuits de multiplication 225a à 225n. Chaque circuit de multiplication reçoit alors, également sur sa deuxième entrée, un deuxième signal de correction de cette déformation de la fonction de transfert du transducteur 10, délivré comme précédemment par la mémoire 230.

On notera également une variante de réalisation qui consiste à placer en parallèle sur le circuit d'évaluation 240 un ou plusieurs circuits destinés à évaluer d'autres moments du spectre de fréquence des signaux de sortie du transducteur 10 que le centre de gravité, et par exemple le moment d'ordre 2 qui permet cette fois d'étudier les variations du coefficient de diffusion ultrasonore en fonction de la fréquence.

Enfin on a vu que l'invention était applicable non seulement à l'exploration d'une ligne (échographie de type A), mais aussi à celle de toute une section plane des tissus à examiner (échographie de type B), à l'aide d'une sonde à déplacement manuel ou mécanique, ou d'une barrette de transducteurs linéaire classique ou à balayage électronique sectoriel. Le signal de sortie du circuit 250 de détermination du coefficient différentiel d'atténuation ultrasonore assure alors dans le dispositif de visualisation 103, selon le cas, soit une modulation de brillance de l'image à l'aide d'une échelle de nuances de gris associées respectivement aux différentes valeurs de ce coefficient à l'intérieur de chacune des zones délimitées dans les tissus examinés par les frontières correspondant aux échos fournis par l'échogramme de type A de sortie du premier circuit de traitement 100, soit une modulation de l'image à l'aide d'une gamme de couleurs associées de même aux différentes valeurs du coefficient.

**Revendications**

1. Appareil d'exploration de milieux et notamment de tissus biologiques par échographie ultrasonore comportant au moins un transducteur ultrasonore (10) associé à un étage d'émission (50) pour assurer l'émission répétée de signaux ultrasonores et à un étage de réception pour assurer la réception des échos ultrasonores correspondant aux obstacles principaux rencontrés dans leur direction de propagation par les signaux émis, l'étage de réception comprenant un premier circuit de traitement (100) des échos reçus composé essentiellement d'un premier amplificateur (101) relié à l'électrode de sortie du transducteur, d'un dispositif (102) de compensation de gain et d'un dispositif (103) de visualisation en fonction du temps des positions des échos le long de la direction d'exploration et de leurs amplitudes, caractérisé en ce que l'étage de réception comprend, en parallèle sur ce premier circuit de traitement (100), un deuxième circuit de traitement (200) composé essentiellement :

A) d'un deuxième amplificateur (210) également relié à l'électrode de sortie du transducteur (10) ;

B) en sortie de ce deuxième amplificateur, d'un ensemble de n voies (220a à 220n) en parallèle les unes sur les autres et comprenant elles-mêmes chacune successivement :

1) un filtre passe-bande (221a à 221n), l'ensemble des filtres ainsi prévus étant tel que leurs bandes passantes respectives sont sensiblement jointives de façon à couvrir approximativement la bande passante du deuxième amplificateur (210) ; et

2) un détecteur d'enveloppe (222a à 222n) comprenant un redresseur et un filtre passe-bas à constante de temps réglable ;

C) en sortie des n voies (220a à 220n), d'un circuit (240) d'évaluation, à partir de leurs signaux de sortie, d'un paramètre qui est un indicateur de dispersion des amplitudes des signaux de fréquence centrale de chaque voie à l'intérieur de la gamme de fréquence couverte par l'ensemble de ces voies et qui, simultanément, est en corrélation locale directe avec la pente moyenne $\beta$, dite coefficient différentiel d'atténuation ultrasonore, de la courbe de variation de l'atténuation ultrasonore dans les tissus explorés en fonction de la fréquence ;

D) en sortie du circuit d'évaluation, d'un circuit (250) de détermination de la valeur du coefficient $\beta$ à l'intérieur de chacune des zones délimitées dans les tissus explorés par les échos correspondant aux obstacles principaux rencontrés, la sortie de ce circuit (250) étant reliée au dispositif de visualisation (103).

2. Appareil d'exploration selon la revendication 1, caractérisé en ce que la constante de temps des détecteurs d'enveloppe (222a à 222n) est supérieure à la distance moyenne entre les plus petits éléments échogènes des tissus explorés divisée par la vitesse moyenne de propagation des ondes ultrasonores dans les tissus explorés.

3. Appareil d'exploration selon l'une des revendications 1 et 2, caractérisé en ce que le deuxième circuit de traitement (200) comprend dans chaque voie, en sortie du détecteur d'enveloppe (222a à 222n), un circuit de multiplication (225a à 225n) recevant sur une première entrée le signal de sortie du détecteur d'enveloppe correspondant et sur une deuxième entrée un signal de correction en fonction du temps de l'effet de diffraction en champ proche dû aux dimensions non infiniment petites du transducteur (10), ce signal de correction étant délivré par une mémoire (230) et les n sorties de ces circuits de multiplication étant reliés aux entrées du circuit d'évaluation (240).

4. Appareil d'exploration selon l'une des revendications 1 et 2, caractérisé en ce que le deuxième circuit de traitement (200) comprend dans chaque voie, en sortie du détecteur d'enveloppe (222a à 222n), un circuit de multiplication (225a à 225n) recevant sur une première entrée le signal de sortie du détecteur d'enveloppe correspondant et sur une deuxième entrée un signal de correction de la déformation de la fonction de transfert du transducteur (10) lorsque celle-ci n'est pas gaussienne, ce signal étant délivré par une mémoire (230) et les n sorties de ces circuits de multiplication étant reliées aux entrées du circuit d'évaluation (240).

5. Appareil d'exploration selon l'une des revendications 1 à 4, caractérisé en ce que le paramètre déterminé par le circuit d'évaluation (240) est le centre de gravité des signaux de sortie des n voies (220a à 220n).

6. Appareil d'exploration selon la revendication 5, caractérisé en ce que le circuit d'évaluation (240) comprend lui-même un premier circuit (241) de sommation des signaux de sortie des n voies (220a à 220n), un deuxième circuit (242) de sommation des signaux de sorties des n voies (220a à 220n) pondérés respectivement par des coefficients proportionnels à la fréquence centrale de chaque voie, et un diviseur (243) du signal de sortie du deuxième circuit de sommation par celui du premier circuit de sommation.

7. Appareil d'exploration selon l'une des revendications 1 à 6, caractérisé en ce que le dispositif de visualisation (103) permet la présentation de l'image d'une seule ligne des tissus examinés en modulation d'amplitude sur deux traces distinctes, cette image étant composée d'une part d'un échogramme de type A de sortie du premier circuit de traitement (100) et d'autre part d'une représentation par paliers dont la hauteur correspond à la valeur du coefficient d'atténuation ultrasonore $\beta$ à l'intérieur de chacune des zones délimitées dans les tissus examinés par les frontières correspondant aux échos visibles sur l'échogramme de type A.

8. Appareil selon l'une des revendications 1 à 6, caractérisé en ce que le signal de sortie du circuit (250) de détermination du coefficient différentiel d'atténuation ultrasonore permet dans le dispositif de visualisation (103) la présentation de l'image d'une section plane des tissus examinés, suivant un mode de type B, avec une modulation de brillance de l'image à l'aide d'une échelle de nuances de gris associées respectivement aux différentes valeurs de ce coefficient à l'intérieur de chacune des zones délimitées dans les tissus examinés par les frontières correspondant aux échos fournis par l'échogramme de type A de sortie du premier circuit de traitement (100).

9. Appareil selon l'une des revendications 1 à 6, caractérisé en ce que le signal de sortie du circuit (250) de détermination du coefficient différentiel d'atténuation ultrasonore permet dans le dispositif de visualisation (103) la présentation de l'image d'une section plane des tissus examinés, suivant un mode de type B, avec une modulation de l'image à l'aide d'une gamme de couleurs associées respectivement aux différentes valeurs de ce coefficient à l'intérieur de chacune des zones délimitées dans les tissus examinés par les frontières correspondant aux échos fournis par l'échogramme de type A de sortie du premier circuit de traitement (100).

**Claims**

1. An apparatus for investigating objects, notably biological tissues, by means of ultrasonic echography, comprising at least one ultrasonic transducer (10) which is connected to a transmitter stage (50) for the repeated transmission of ultrasonic signals and to a receiver stage for receiving ultrasonic echos corresponding to the most important obstacles encountered by the transmitted signals in their direction of propagation, said receiver stage comprising a first processing circuit (100) for the echos received which consists mainly of a first amplifier (101) which is connected to the output electrode of the transducer, a gain compensation device (102), and a device (103) for displaying positions of the echos in the scanning direction as a function of time as well as the amplitudes thereof, characterized in that the receiver stage comprises a second processing circuit (200) which is connected parallel to the first processing circuit (100) and which consists mainly of :

A) a second amplifier (210) which is also connected to the output electrode of the transducer (10) ;

B) a group of n mutually parallel channels (200a ... 220n) which are connected to the output of the second amplifier and each of which successively comprises :

1) a band-pass filter (221a ... 221n), the respective pass-bands of the various filters being substantially consecutive so that together they span approximately the pass-bands of the second amplifier (210) ; and

2) an envelope detector (222a ... 222n) which comprises a rectifier and a low-pass filter having a variable time constant ;

C) an arithmetic circuit (240) which is connected to the output of the n channels (220a ... 220n) and which serves to calculate, on the basis of the output signals thereof, a parameter which is an indicator for the spread of the amplitudes of the signals of central frequency of each of the channels which occurs within the total frequency range covered by all channels together and which is also directly locally correlated to the mean slope $\beta$, being the so-called differential ultrasonic attenuation factor, of the curve of the variation of the ultrasonic attenuation as a function of the frequency in the tissues scanned ;

D) a circuit (250) which is connected to the output of the arithmetic circuit (240) in order to determine the value of the factor $\beta$ whithin each of the zones bounded by the echos corresponding to the most important obstacles encountered in the tissues scanned, the output of said circuit (250) being connected to the display device (103).

2. An investigating apparatus as claimed in Claim 1, characterized in that the time constant of the envelope detectors (222a ... 222n) is larger than the mean distance between the smallest elements in the tissue scanned which still produce echos, divided by the mean propagation speed of the ultrasonic waves in the tissues scanned.

3. An investigating apparatus as claimed in Claim 1 or 2, characterized in that the second processing circuit (200) comprises, in each channel, a multiplier circuit (225a ... 225n) which is connected to the output of the envelope detector (222a ... 222n) and a first input of which receives the output signal of the corresponding envelope detector, a second input thereof receiving a correction signal for correcting, as a function of time, the diffraction effect in the near field which is caused by the fact that the dimensions of the transducer (10) are not infinitely small, said correction signal originating from a memory (230), the n outputs of these multiplier circuits being connected to the inputs of the arithmetic circuit (240).

4. An investigation apparatus as claimed in Claim 1 or 2, characterized in that the second processing circuit (200) comprises, in each channel, a multiplier circuit (225a ... 225n) which is connected to the output of the envelope detector (222a ... 222n) and a first input of which receives the output signal of the corresponding envelope detector, a second input thereof receiving a signal for correcting the deformation of the transfer function of the transducer when the latter is not gaussian, said signal originating from a memory (230), the n outputs of these multiplier circuits being connected to the inputs of the arithmetic circuit (240).

5. An investigating apparatus as claimed in any one of the Claims 1 to 4, characterized in that the parameter determined by the arithmetic circuit (240) is the centre of gravity of the output signals of the n channels (220a ... 220n).

6. An investigating apparatus as claimed in Claim 5, characterized in that the arithmetic circuit (240) comprises a first circuit (241) for summing the output signals of the n channels (220a ... 220n), a second circuit (242) for summing the output signals of the n channels (220a ... 220n) after weighting with respective factors which are proportional to the central frequency of each channel, and a divider (243) for dividing the output signal of the second summing circuit by that of the first summing circuit.

7. An investigating apparatus as claimed in any of the Claims 1 to 6, characterized in that the display device (103) enables the display of the image of a single line of the tissues examined as two separate traces with amplitude modulation, said image consisting on the one hand of an A-type echogram originating from the first processing circuit (100) and on the other hand of a stepped curve in which the height of the steps corresponds to the values of the ultrasonic attenuation factor β within each of the zones in the tissues examined which are bounded by the boundaries which correspond to the echoes visible in the A-type echogram.

8. An apparatus as claimed in any one of the Claims 1 to 6, characterized in that the output signal of the circuit (250) for determining the differential ultrasonic attenuation factor enables the display device (103) to display the image of a plane slice of the tissues examined in a B-type mode with brightness modulation of the image by means of a grey scale associated with the different values of this factor within each of the zones bounded in the tissues examined by the boundaries corresponding to the echos supplied by the A-type echogram from the output of the first processing circuit (100).

9. An apparatus as claimed in any one of the Claims 1 to 6, characterized in that the output signal of the circuit (250) for determining the differential ultrasonic attenuation factor enables the display device (103) to display the image of a plane slice of the tissue examined in a B-type mode with modulation of the image by means of a range of colours associate with the different values of this factor within each of the zones bounded in the tissues examined by the boundaries corresponding to the echos supplied by the A-type echogram from the output of the first processing circuit (100).

**Patentansprüche**

1. Vorrichtung zur Untersuchung von Objekten, insbesondere biologischen Geweben mittels Ultraschallechographie, mit zumindest einem Ultraschallwandler (10), der mit einer Übertragungsstufe (50) für die wiederholte Übertragung von Ultraschallsignalen sowie mit einer Empfängerstufe zum Empfangen der Ultraschallechos entsprechend den von den übertragenen Signalen in ihrer Fortpflanzungsrichtung begegneten wichtigsten Hindernissen verbunden ist, wobei die Emfpängerstufe eine erste Verarbeitungsschaltung (100) für die empfangenen Echos enthält, die im wesentlichen aus einem ersten Verstärker (101), der mit der Ausgangselektrode des Ultraschallwandlers verbunden ist, einem Verstärkungsausgleicher (102) und einem Anzeigegerät (103) zum Anzeigen der Positionen der Echos in der Abtastrichtung in zeitlicher Abhängigkeit sowie ihrer Amplituden besteht, dadurch gekennzeichnet, dass die Empfängerstufe parallel zur ersten Verarbeitungsschaltung (100) eine zweite Verarbeitungsschaltung (200) enthält, die im wesentlichen aus folgenden Elementen besteht :

A) einem zweiten Verstärker (210), der ebenfalls mit der Ausgangselektrode des Wandlers (10) verbunden ist ;

B) einer Gruppe von n parallelen Kanälen (220a ... 220n), die an den Ausgang des zweiten Verstärkers angeschlossen sind, und die je aufeinanderfolgend folgendes enthalten :

1) ein Bandpassfilter (221a ... 221n), wobei die betreffenden Durchlassbereiche der verschiedenen Filter im wesentlichen aufeinanderfolgend und zusammen annähernd den Durchlassbereich des zweiten Verstärkers (210) umfassen und

2) einen Umhüllungsdetektor (222a ... 222n), der einen Gleichrichter und ein Tiefpassfilter mit einer variabelen Zeitkonstante enthält ;

C) einer Auswertungsschaltung (240) die an den Ausgang der n Kanäle (220a ... 222n) angeschlossen ist und zum Errechnen eines Parameters auf der Basis ihrer Ausgangssignale dient, wobei dieser Parameter ein Indikator für die Streuung der Amplituden der Signale mittlerer Frequenz jedes der Kanäle innerhalb des durch alle Kanäle zusammen umfassten Frequenzbereiches ist und ebenfalls örtlich direkt mit der als differentielle Ultraschallabschwächungsfaktor bezeichneten mittleren Neigung β der Schwankungskurve der Ultraschalabschwächung in Abhängigkeit von der in den Geweben abgetasteten Frequenz zusammenhängt ;

D) einer an den Ausgang der Auswertungsschaltung angeschlossenen Schaltung (250) zur Bestimmung des Wertes des Koeffizienten β innerhalb jeder der von den Echos entsprechend den wichtigsten begegneten Hindernissen in den abgetasteten Geweben abgegrenzten Zonen, wobei der Ausgang dieser Schaltung mit dem Anzeigegerät (103) verbunden ist.

2. Vorrichtung nach Anspruch 1, dadurch gekennzeichnet, dass die Zeitkonstante der Umhüllungsdetektoren (222a ... 222n) grösser als der Quotient des mittleren Abstandes zwischen den kleinsten Elementen im abgetasteten Gewebe, die noch Echos erzeugen, geteilt durch die mittlere Fortpflanzungsgeschwindigkeit der Ultraschallwellen in den abgetasteten Geweben ist.

3. Vorrichtung nach einem der Ansprüche 1 und 2, dadurch gekennzeichnet, dass die zweite Verarbeitungsschaltung (200) in jedem Kanal eine Multiplizierschaltung (225a ... 225n) enthält, die an den Ausgang des Umhüllungssdetektors (222a ... 222n) angeschlossen ist und an ihrer ersten Eingang das Ausgangssignal des entsprechenden Umhüllungsdetektors und an ihrer zweiten Eingang ein Korrektursignal zum zeitabhängigen Korrigieren der Beugungsauswirkung im benachbarten Feld empfängt, die dadurch verursacht wird, dass die Abmessungen des Wandlers (10) nicht unendlich klein sind, wobei das genannte Korrektursignal einem Speicher (230) entstammt, wobei die n Ausgänge der Multiplizierschaltungen mit den Eingängen der Auswertungsschaltung (240) verbunden sind.

4. Vorrichtung nach einem der Ansprüche 1 und 2, dadurch gekennzeichnet, dass die zweite Verarbeitungsschaltung (200) in jedem Kanal eine Multiplizierschaltung (225a ... 225n) enthält, die an den Ausgang des Umhüllungsdetektors (222a ... 222n) angeschlossen ist, und deren erster Eingang das Ausgangssignal des entsprechenden Umhüllungsdetektors, und deren zweiter Eingang ein Korrektursignal zum Korrigieren der Verformung der Übertragungsfunktion des Wandlers (10) empfängt, wenn diese Funktion keine Gauss-Funktion ist, wobei dieses Signal einem Speicher (230) entstammt, und die n Ausgänge dieser Multiplizierschaltungen mit Eingängen der Auswertungsschaltung (240) verbunden sind.

5. Vorrichtung nach einem der Ansprüche 1 bis 4, dadurch gekennzeichnet, dass der von der Auswertungsschaltung (240) bestimmte Parameter der Schwerpunkt der Ausgangssignale der n Kanäle (220a ... 220n) ist.

6. Vorrichtung nach Anspruch 5, dadurch gekennzeichnet, dass die Auswertungsschaltung (240) selbst eine erste Summierungsschaltung (241) für die Ausgangssignale der n Kanäle (220a ... 220n), eine zweite Summierungsschaltung (242) für die Ausgangssignale der n Kanäle (220a ... 220n) nach dem jeweiligen Gewichten durch zur mittleren Frequenz jedes Kanals proportionellen Koeffizienten, und einen Teiler (243) des Ausgangssignals der zweiten Summierungsschaltung durch das der ersten Summierungsschaltung enthält.

7. Vorrichtung nach einem der Ansprüche 1 bis 6, dadurch gekennzeichnet, dass das Anzeigegerät (103) sich zum Anzeigen des Bildes einer einzigen Linie des abgetasteten Gewebe mit Amplitudenmodulation auf zwei getrennten Kanälen eignet, wobei dieses Bild einerseits aus einem Echogramms vom Typ A aus der ersten Verarbeitungsschaltung (100) und andererseits aus einer Darstellung einer Stufenkennlinie besteht, deren Höhe dem Wert des Ultraschallabschwächungskoeffizienten β innerhalb jeder der Zonen in den abgetasteten Geweben entspricht, die durch Grenzen entsprechend der im Echogramm von Typ A sichtbaren Echos begrenzt sind.

8. Vorrichtung nach einem der Ansprüche 1 bis 6, dadurch gekennzeichnet, dass das Ausgangssignal der Schaltung (250) zur Bestimmung des differentiellen Ultraschallabschwächungskoeffizienten im Anzeigegerät (103) die Darstellung des Bildes eines flachen Abschnitts der abgetasteten Gewebe nach einer Betriebsart vom Type B mit einer Helligkeitsmodulation des Bildes mit Hilfe einer Graustufe ermöglicht, die verschiedenen Werten dieses Koeffizienten im Inneren jeder der Zonen in den abgetasteten Geweben zugeordnet ist, die durch Grenzen entsprechend den vom Echogramm des Typs A aus der ersten Verarbeitungsschaltung (100) gelieferten Echos begrenzt werden.

9. Vorrichtung nach einem der Ansprüche 1 bis 6, dadurch gekennzeichnet, dass das Ausgangssignal der Schaltung (250) zur Bestimmung des differentiellen Ultraschallabschwächungskoeffizienten im Anzeigegerät (103) die Darstellung des Bildes eines flachen Abschnitts der abgetasteten Gewebe nach einer Betriebsart vom Typ B mit einer Bildmodulation mit Hilfe eines Farbgammas ermöglicht, das den verschiedenen Werten dieses Koeffizienten im Innern jeder der Zonen in den abgetasteten Gewebe entspricht, die durch Grenzen entsprechend den vom Echogramm von Typ A aus der ersten Verarbeitungsschaltung (100) gelieferten Echos begrenzt werden.

FIG.1

FIG.2

FIG.6

220a  220i  220n

210

231  240

241  245

242  243  250

246

FIG.3

0 077 585

220a

210

220i

E0  E1  E2  Em

220n

A

0

4(a)

4(b)

4(i)

FIG.4

4(n)

FIG.5

0 077 585